Europäisches Patentamt

European Patent Office

Office européen des brevets

(19)

(11) Veröffentlichungsnummer: **0 053 660**
**B1**

# (12) EUROPÄISCHE PATENTSCHRIFT

(45) Veröffentlichungstag der Patentschrift:
23.01.85

(21) Anmeldenummer: 81107825.2

(22) Anmeldetag: 01.10.81

(51) Int. Cl.⁴: **G 06 K 15/02**, B 41 J 25/20,
G 06 F 3/12

(54) **Verfahren zum Darstellen von Zeichen.**

(30) Priorität: 08.12.80 DE 3046216

(43) Veröffentlichungstag der Anmeldung:
16.06.82 Patentblatt 82/24

(45) Bekanntmachung des Hinweises auf die Patenterteilung:
23.01.85 Patentblatt 85/4

(84) Benannte Vertragsstaaten:
CH FR GB IT LI NL SE

(56) Entgegenhaltungen:
DE - B - 2 513 059
DE - B - 2 937 725
US - A - 3 199 446

IBM TECHNICAL DISCLOSURE BULLETIN, Band 22, Nr.
8B, Januar 1980, Seiten 3786-3788, Armonk, U.S.A., A.W.
MAHOLICK et al.: "Multiple overstrike printing method"

(73) Patentinhaber: Siemens Aktiengesellschaft, Berlin und
München Wittelsbacherplatz 2, D-8000 München 2 (DE)

(72) Erfinder: Hans, Karl, Ing.-grad., Anzinger Strasse 18,
D-8000 München 80 (DE)
Erfinder: Hackstein, Helmut, Schwarzwaldstrasse 89,
D-7260 Calw-Altburg (DE)

## Beschreibung

Die Erfindung bezieht sich auf ein Verfahren zum Darstellen von Zeichen, die als Einzelzeichen eines vorgegebenen Zeichenvorrats oder zusammengesetzt aus mehreren Einzelzeichen mittels einer Druckeinheit auf einem Aufzeichnungsträger abgedruckt werden, wobei die Zeichen durch Datenwörter codiert werden, wobei den Datenwörtern Codewörter zugeordnet werden, mit denen die Einzelzeichen in der Druckeinheit adressierbar sind und wobei die jeweils einem Zeichen zugeordneten Datenwörter einem ersten Speicher zugeführt werden, der, falls ein entsprechendes Codewort in ihm gespeichert ist, dieses an die Druckeinheit abgibt und der andernfalls ein Adressenwort an einen zweiten Speicher abgibt, in dem ebenfalls Codewörter gespeichert sind.

Die Steuereinheiten von Textstationen sind üblicherweise mit einem Mikroprozessor versehen. Zwischen den Eingabeeinheiten, der Steuereinheit und den Ausgabeeinheiten erfolgt eine Übertragung von Datenwörtern über einen aus mehreren parallelen Leitungen bestehenden Datenbus. Als Eingabeeinheit kann eine Tastatur, ein Empfänger oder ein Speicher vorgesehen sein und als Ausgabeeinheit kann eine Druckeinheit, ein Sender und/oder eine weitere Speichereinheit vorgesehen sein. Mittels der Druckeinheit werden Zeichen auf einem Aufzeichnungsträger, üblicherweise auf Papier, dargestellt. Die Druckeinheit kann als Druckwerk ein bekanntes Typendruckwerk oder ein bekanntes Mosaikdruckwerk enthalten. Die mittels der Druckeinheit darzustellenden Zeichen werden innerhalb der Textstation über den Datenbus übertragen und sie sind daher durch Datenwörter codiert.

Falls die Druckeinheit als Typendruckwerk ausgebildet ist, wird jede Drucktype durch ein bestimmtes Codewort aufgerufen. Falls das Typendruckwerk beispielsweise mit einer Typenscheibe versehen ist, die eine Mehrzahl von Speichen enthält, an deren Enden die jeweilige Drucktype angeordnet ist, stellen die Codewörter beispielsweise die Speichennummern dar. Falls das Druckwerk als Mosaikdruckwerk ausgebildet ist und die Zeichen in einem Zeichengenerator gespeichert sind, stellen die Codewörter die Adressen der Zeichen im Zeichengenerator dar.

Üblicherweise sind die Datenwörter von den Codewörtern verschieden, so daß eine Umsetzung von den Datenwörtern auf die Codewörter erforderlich ist. Zu diesem Zweck ist in einer Textstation ein Speicher vorgesehen, an dessen Adresseneingängen die Datenwörter anliegen und an dessen Ausgängen die Codewörter abgegeben werden. Ein derartiger Speicher kann immer dann verwendet werden, wenn jedem Datenwort ein als Drucktype oder als Zeichen im Zeichengenerator vorhandenes Einzelzeichen zugeordnet ist. Um den Zeichenvorrat jedoch möglichst klein zu halten, ist es möglich, ein durch ein Datenwort codiertes Zeichen aus mehreren als Drucktypen vorhandenen Einzelzeichen zusammenzusetzen. Ein Beispiel hierfür ist das Zeichen »╪«, das aus den Zeichen »/« und »=« zusammengesetzt werden kann. Andererseits ist es auch möglich, Zeichen, die durch mehrere Datenwörter dargestellt werden, als eine Drucktype bzw. ein Zeichen im Zeichengenerator vorzusehen. In den beiden letztgenannten Fällen ist es noch ohne weiteres möglich, die Datenwörter in die entsprechenden Codewörter umzusetzen.

Aus der DE-AS 2 937 725 ist es bekannt, die Datenwörter von denjenigen Zeichen, für die kein Codewort vorhanden ist, in Codewörter von Zeichen umzusetzen, die das durch das Datenwort codierte Zeichen beschreiben. Beispielsweise wird das Datenwort für das Zeichen »§« oder »$« in die Codewörter der Zeichen »par« bzw. »dol« umgesetzt. Die Umsetzung erfolgt in der Weise, daß anstelle des Codewortes im Speicher ein Adressenwort für einen weiteren Speicher gespeichert ist, in dem die Codewörter für die beschreibenden Zeichen gespeichert sind. In diesem Fall wird jedoch das darzustellende Zeichen selbst nicht aus Einzelzeichen zusammengesetzt, sondern es werden mehrere Zeichen an mehreren Zeichenplätzen abgedruckt, die das entsprechende Zeichen beschreiben.

Der Erfindung liegt daher die Aufgabe zugrunde, ein Verfahren anzugeben, mit dem auf einfache Weise Zeichen dargestellt werden können, unabhängig davon, ob sie als Einzelzeichen vorhanden sind oder am selben Zeichenplatz aus Einzelzeichen zusammengesetzt werden.

Erfindungsgemäß wird die Aufgabe bei dem Verfahren der eingangs genannten Art durch die im kennzeichnenden Teil des Patentanspruchs 1 angegebenen Merkmale gelöst.

Das Verfahren gemäß der Erfindung hat den Vorteil, daß es einen einfachen Aufbau einer Textstation auch dann ermöglicht, wenn durch die Druckeinheit unterschiedliche Schriftarten dargestellt werden müssen. Die Steuereinheit kann in allen Textstationen in gleicher Weise ausgebildet sein und mit den gleichen Programmen für den Mikroprozessor arbeiten. Die Speicher können auf einfache Weise auswechselbar angeordnet sein, so daß eine Änderung für eine andere Schriftart durch Austauschen der Speichereinheit erfolgen kann.

Um ein besonders schönes Schriftbild bei der Darstellung der Zeichen zu erreichen, ist es vorteilhaft, wenn die Codewörter einem vierten Speicher zugeführt werden, der ein den Vorschub vor und/oder nach dem Abdruck eines Zeichens in Abhängigkeit von dessen Breite festlegendes Steuerwort an die Druckeinheit abgibt.

Um bei Zeichen mit einer kleinen Fläche ein Durchschlagen des Aufzeichnungsträgers zu verhindern, ist es günstig, wenn die Codewörter einem vierten Speicher zugeführt werden, der ein die Anschlagstärke jedes Einzelzeichens in Abhängigkeit von dessen Fläche festlegendes Steuerwort an die Druckeinheit abgibt.

Die Steuerung der Druckeinheit beim Zusammensetzen von Zeichen aus Einzelzeichen wird auf besonders einfache Weise erreicht, wenn die Positionierwörter die Richtung und den Betrag der Positionierung eines Druckwerks und/oder des Aufzeichnungsträgers angeben. Der Vorschub vor und/oder nach dem Abdruck des Zeichens kann dabei unberücksichtigt bleiben, wenn die Summe der durch die Positionierwörter ausgelösten Positionierungen 0 ergibt.

Das Verfahren wird insbesondere dann in vorteilhafter Weise eingesetzt, wenn die Druckeinheit eine an sich bekannte Typenscheibe enthält, die mit Speichen versehen ist, an deren Enden den Einzelzeichen zugeordnete Typen angeordnet sind und wenn die Codewörter die Nummer der jeweiligen Speiche kennzeichnen oder wenn die Druckeinheit einen Mosiakdruckkopf und einen zugehörigen Zeichengenerator enthält und wenn die Codewörter den Adressen der Einzelzeichen im Zeichengenerator zugeordnet sind.

Im folgenden wird eine Durchführung des Verfahrens anhand von Zeichnungen näher erläutert. Es zeigt

Fig. 1 ein Blockschaltbild einer Anordnung zur Durchführung des Verfahrens,

Fig. 2 ein Flußdiagramm, in dem die einzelnen Verfahrensschritte dargestellt sind,

Fig. 3 eine Darstellung des Inhalts des ersten Speichers,

Fig. 4 eine Darstellung des Inhalts eines zweiten Speichers.

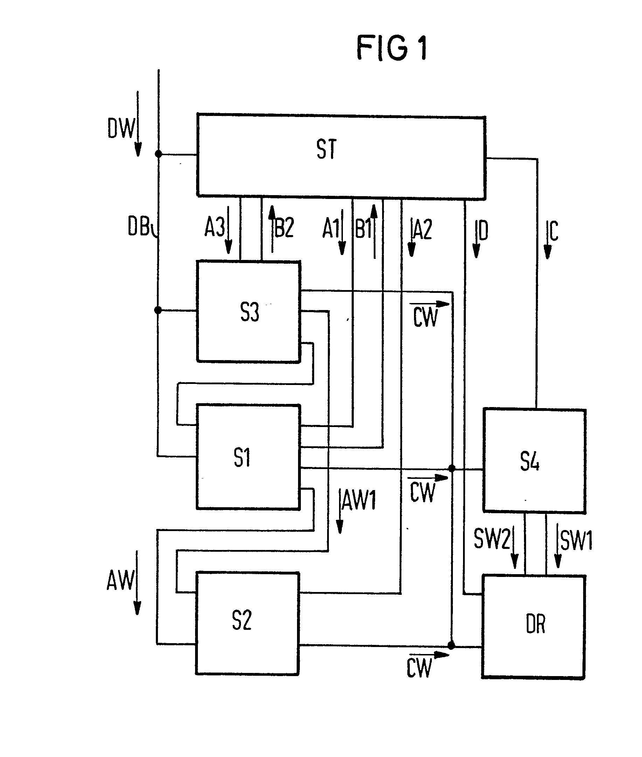

Die in Fig. 1 dargestellte Anordnung zum Darstellen von Zeichen enthält vier Speicher S1 bis S4, die Bestandteile einer einzigen auswechselbaren Speichereinheit sein können und eine Steuereinheit ST. Die Zeichen werden mittels einer bekannten Druckeinheit DR auf einem Aufzeichnungsträger dargestellt. Die darzustellenden Zeichen sind durch Datenwörter DW codiert. Diese werden mittels einer Eingabeeinheit, beispielsweise einer Tastatur, eingegeben und über einen Datenbus DB zu einer zentralen Steuereinheit und zur Druckeinheit DR übertragen. Die Datenwörter DW können zusätzlich Zuordnungsdaten enthalten, die den Zeichen zugeordnet sind und die beispielsweise angeben, daß es sich um ein Zeichen mit Vorschub oder um ein vorschubloses Zeichen handelt. Die Datenwörter DW bestehen beispielsweise aus acht Bits. Die Druckeinheit DR ist beispielsweise als Typendrucker mit einer Typenscheibe ausgebildet. Die Typenscheibe enthält eine Mehrzahl von Speichen, an deren Enden Typen angeordnet sind, die jeweils ein Einzelzeichen darstellen. Vor jedem Abdruck wird die Typenscheibe derart positioniert, daß die entsprechende Type eine bestimmte vorgegebene Stellung einnimmt. Für die Positionierung wird der Druckeinheit DR ein Codewort CW zugeführt, das beispielsweise die Nummer einer entsprechenden Speiche darstellt. Das Codewort CW besteht beispielsweise auch aus acht Bits.

Insgesamt können vier Gruppen von dazustellenden Zeichen unterschieden werden. Bei der ersten Gruppe ist jedem Datenwort DW ein Codewort CW zugeordnet. Jedem Datenwort DW entspricht damit ein Einzelzeichen der Druckeinheit DR. Derartige Zeichen sind beispielsweise die Zeichen »a, A, 1, 2«.

Die Zeichen der zweiten Gruppe werden ebenfalls durch ein Datenwort DW dargestellt, jedoch aus mehreren Einzelzeichen zusammengesetzt. Für jedes Datenwort DW müssen daher mehrere Codewörter CW erzeugt werden. Zu dieser Gruppe gehören die Zeichen »$«, »#«.

Die Zeichen der dritten Gruppen werden durch mehrere, beispielsweise zwei Datenwörter DW dargestellt, sind jedoch als ein Einzelzeichen in der Druckeinheit DR vorhanden. Zu dieser Gruppe gehören die Zeichen »ä, Ä«.

Die Zeichen der vierten Gruppe sind Kombinationszeichen, die nicht als eigene Einzelzeichen vorhanden sind. Sie werden durch mehrere, beispielsweise ebenfalls zwei Datenwörter DW dargestellt und für jedes Datenwort DW wird ein Codewort CW erzeugt und an die Druckeinheit DR abgegeben. Zu dieser Gruppe gehört beispielsweise das Zeichen »é«.

Wenn ein Zeichen durch ein Datenwort DW dargestellt wird, also ein Zeichen der ersten oder zweiten Gruppe vorliegt, wird dieses durch ein von der Steuereinheit ST abgegebenes Signal A1 dem ersten Speicher S1 zugeführt. Wenn das entsprechende Codewort CW im Speicher S1 vorhanden ist, also ein Zeichen der ersten Gruppe vorliegt, wird es unter Steuerung durch ein Signal D an die Druckeinheit DR abgegeben. Andernfalls liegt ein Zeichen der zweiten Gruppe vor. Der Speicher S1 gibt ein Signal B1 ab und ein Adressenwort AW wird abgegeben, das durch ein Signal A2 dem Speicher S2 zugeführt wird und dort die Abgabe von entsprechenden Codewörtern CW und zugehörigen Positionierwörtern PW veranlaßt. Die Codewörter CW und die zugehörigen Positionierwörter PW werden zeitlich nacheinander an die Druckeinheit DR abgegeben und das entsprechende Zeichen wird aus Einzelzeichen zusammengesetzt. Durch die Positionierwörter PW wird dabei das Druckwerk in der Druckeinheit DR und/oder der Aufzeichnungsträger verschoben, so daß die Einzelzeichen an den richtigen Stellen innerhalb des Zeichens abgedruckt werden.

Die Datenwörter DW von Zeichen der dritten und vierten Gruppe werden zuerst durch ein Signal A3 einem dritten Speicher S3 zugeführt. Falls dort ein entsprechendes Codewort CW vorhanden ist, also ein Zeichen der dritten Gruppe vorliegt, wird dieses zur Druckeinheit DR übertragen. Andernfalls liegt ein Zeichen der vierten Gruppe vor. Der Speicher S3 gibt ein Signal B2 ab und die Datenwörter DW werden zeitlich nacheinander durch das Signal A1 dem Speicher S1 zugeführt und dort in gleicher Weise behandelt wie die Datenwörter DW von Zeichen der ersten und zweiten Gruppe, d. h. die entsprechenden Codewörter CW werden entweder aus dem Speicher S1 oder dem Speicher S2 ausgelesen. Gegebenenfalls kann vom Speicher S3 durch ein Adressenwort AW1 auch direkt auf den Speicher S2 zugegriffen werden, wie dies auch durch die Adressenwörter AW erfolgt.

Außer der Druckeinheit DR werden die Codewörter CW zu durch ein Signal C festgelegten Zeitpunkten auch einem vierten Speicher S4 zugeführt, in dem Steuerwörter SW1 und SW2 gespeichert sind, die den Vorschub des Druckwerks in Abhängigkeit von der Breite des Zeichens bzw. die Abdruckstärke in Abhängigkeit von der Fläche des Einzelzeichens festlegen.

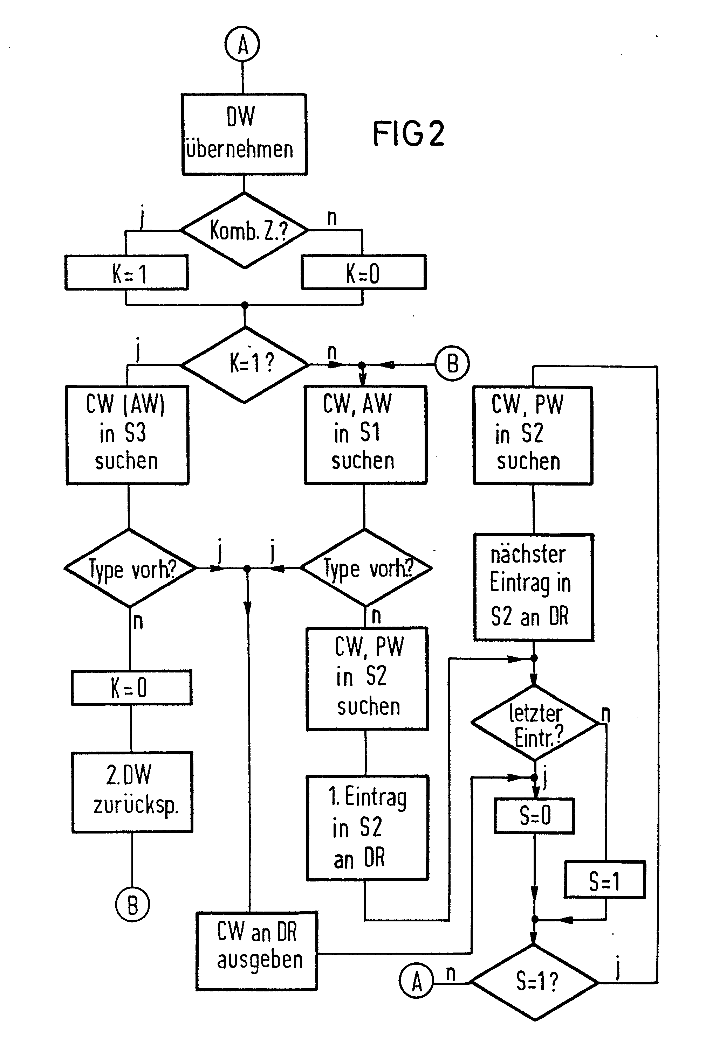

Weitere Einzelheiten des Verfahrens werden im folgenden zusammen mit dem in Fig. 2 dargestellten Flußdiagramm beschrieben.

Bei der Verfolgung des in Fig. 2 dargestellten Flußdiagramms wird zunächst angenommen, daß ein Zeichen der ersten Gruppe dargestellt werden soll. Im ersten Schritt wird das Zeichen in Form des Datenwortes DW von der Eingabeeinheit oder der zentralen Steuereinheit übernommen. Da es sich nicht um ein Kombinationszeichen handelt, wird die entsprechende Abfrage negativ beantwortet. Ein Zustandsbit K wird auf den Binärwert 0 gesetzt. Eine anschließende Abfrage des Zustandsbits K wird ebenfalls negativ beantwortet. Die Steuereinheit ST gibt das Signal A1 an den Speicher S1 ab, wodurch das Datenwort DW dem Speicher S1 zugeführt wird. Das Zeichen ist in der Druckeinheit DR als Type vorhanden und im Speicher S1 ist ein entsprechendes Codewort CW gespeichert. Das Codewort wird aus dem Speicher S1 ausgelesen und der Druckeinheit DR zugeführt, wo das entsprechende Zeichen abgedruckt wird.

Falls das Datenwort DW einem Zeichen der zweiten Gruppe zugeordnet ist und als Type nicht vorhanden ist, wird aus dem Speicher S1 ein Adressenwort AW ausgelesen und unter Steuerung eines Signals A2 dem Speicher S2 zugeführt. In diesem Fall handelt es sich um ein Kombinationszeichen, das aus mehreren Einzelzeichen zusammengesetzt wird. Zunächst wird das erste Codewort CW und das zugehörige Positionierwort PW aus dem Speicher S2 ausgegeben. Da noch mindestens ein weiteres Codewort CW und ein Positionierwort PW zu dem Zeichen gehören, handelt es sich nicht um den letzten Eintrag und ein Zustandsbit S nimmt den Binärwert 1 an. Eine anschließende Überprüfung des Zustandsbits S auf den Binärwert 1 ergibt eine positive Entscheidung, wodurch der nächste Eintrag aus dem Speicher S2 ausgelesen wird. Unter der Annahme, daß es sich nun um den letzten Eintrag handelt, der zu dem Zeichen gehört, nimmt das Zustandsbit S den Binärwert 0 an. Eine anschließende Überprüfung des Zustandsbits S ergibt eine negative Entscheidung, wodurch die Ausgabe beendet wird.

Falls das Datenwort ein Zeichen der dritten Gruppe darstellt, handelt es sich um ein Kombinationszeichen, so daß die erste Entscheidung positiv ist und das Zustandsbit den Binärwert 1 annimmt. Eine anschließende Abfrage des Zustandsbits K wird positiv beantwortet und unter Steuerung des Signals A3 werden die Datenwörter DW dem Speicher S3 zugeführt. Wenn eine entsprechende Type und damit ein entsprechendes Codewort CW vorhanden ist, wird es unter Steuerung des Signals D der Druckeinheit DR zugeführt.

Falls die Datenwörter DW ein Zeichen der vierten Gruppe darstellen, handelt es sich ebenfalls um ein Kombinationszeichen und das Codewort CW wird zunächst im SpeicherS3 gesucht. Da es nicht als Type vorhanden ist, nimmt das Zustandsbit K, das das Kombinationszeichen kennzeichnet, den Binärwert 0 an und das zweite Datenwort DW wird in die zentrale Steuereinheit oder in der Steuereinheit ST zurückgespeichert. Anschließend wird das erste Datenwort DW dem Speicher S1 zugeführt. Danach wird das Datenwort DW in gleicher Weise behandelt wie ein Datenwort DW, das einem Zeichen der ersten oder zweiten Gruppe zugeordnet ist. Anschließend wird das zurückgespeicherte zweite Datenwort DW abgeholt und ebenfalls in gleicher Weise behandelt wie ein Datenwort DW, das ein Zeichen der ersten oder zweiten Gruppe darstellt.

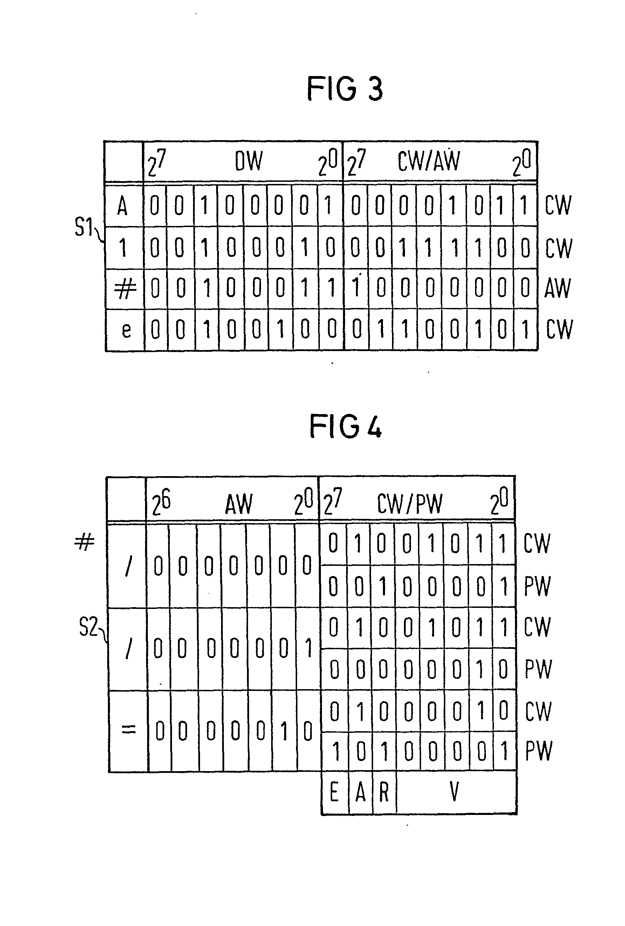

Bei der Darstellung in Fig. 3 ist ein Ausschnitt aus dem Inhalt des Speichers S1 dargestellt. Unter der durch ein Datenwort DW angegebenen Adresse ist in dem Speicher S1 entweder ein Codewort CW oder ein Adressenwort AW gespeichert. Die Zeichen »A, 1, e« gehören der ersten Gruppe an und für sie sind im Speicher S1 die entsprechenden Codewörter CW gespeichert. Das Zeichen»#« ist ein Zeichen der zweiten Gruppe, so daß anstelle eines Codewortes CW ein Adressenwort AW für den Speicher S2 gespeichert ist.

Die Unterscheidung zwischen Codewörtern CW und Adressenwörtern AW wird dadurch getroffen, daß die Stelle $2^7$ den Binärwert 0 bzw. den Binärwert 1 enthält.

Die Darstellung in Fig. 4 zeigt einen Ausschnitt aus dem Inhalt des Speichers S2. Mit dem Adressenwort AW aus Fig. 3, bei dem das Bit $2^7$ abgestreift wird, wird in Fig. 4 eine Folge von Codewörtern CW und Positionierwörtern PW aufgerufen, mit der es möglich ist, das Zeichen »#« darzustellen. Das Zeichen»#« wird aus zwei Zeichen »/« und einem Zeichen »=« zusammengesetzt. Zu jedem Codewort CW wird ein zugehöriges Positionierwort PW ausgelesen. Während das Codewort CW die Speichernummer angibt, gibt das Positionierwort PW an, wie das Druckwerk und/oder der Aufzeichnungsträger vor dem Abdruck verschoben werden müssen. Außerdem gibt das Positionierwort PW an der Stelle E an, ob noch ein weiterer Eintrag folgt, der zu dem Zeichen gehört oder nicht. Wenn E den Binärwert 0 hat, folgt ein weiterer Eintrag und der Binärwert 1 kennzeichnet das Ende einer Folge. An der Stelle A gibt ein Binärwert 0 an, daß das Druckwerk bewegt wird, während der Binärwert 1 angibt, daß der Aufzeichnungsträger verschoben wird. An der Stelle R wird mit dem Binärwert 0 gekennzeichnet, ob das Druckwerk nach rechts bzw. der Aufzeichnungsträger aufwärts bewegt wird. In entsprechender Weise gibt der Binärwert 1 an, daß das Druckwerk nach links bzw. der Aufzeichnungsträger abwärts bewegt wird. Der Betrag der jeweiligen Bewegung wird durch die Binärzeichen V angegeben. Zweckmäßigerweise werden die Positionierwörter PW so gewählt, daß die Summe der Bewegungen bei einem abgedruckten zusammengesetzten Zeichen Null ergibt.

Immer dann, wenn der Druckeinheit DR ein gültiges Codewort CW zugeführt wird, gibt die Steuereinheit ST an den Speicher S4 ein Signal C ab, um aus diesem die Steuerwörter SW1 und SW2 auszulesen. Während die Steuerwörter SW1 den Vorschub vor und/oder nach dem Abdruck eines Zeichens festlegt, legen die Steuerwörter SW2 die Abdruckstärke der Einzelzeichen fest.

Falls an der Textstation die Möglichkeit besteht, mittels eines Schalters S zwischen zwei unterschiedlichen Abdruckstärken zu wählen, nämlich normal und stark und es mit Hilfe des Druckwerks möglich ist, die Einzelzeichen in drei unterschiedlichen Andruckstärken zu drucken, ist es mit Hilfe der Steuerwörter SW2 möglich, die Abdruckstärke in Abhängigkeit von der Fläche des jeweiligen Einzelzeichens zu steuern. Falls die normale Abdruckstärke eingestellt wird, werden Einzelzeichen mit kleiner Fläche schwach abgedruckt und Einzelzeichen mit großer Fläche mit mittlerer Stärke abgedruckt. In entsprechender Weise werden, falls ein starker Abdruck eingestellt ist, Einzelzeichen mit kleiner Fläche mit mittlerer Stärke abgedruckt und Einzelzeichen mit großer Zeichenfläche stark abgedruckt.

**Patentansprüche**

1. Verfahren zum Darstellen von Zeichen, die als Einzelzeichen eines vorgegebenen Zeichenvorrats oder zusammengesetzt aus mehreren Einzelzeichen mittels einer Druckeinheit auf einem Aufzeichnungsträger abgedruckt werden, wobei die Zeichen durch Datenwörter codiert werden, wobei den Datenwörtern Codewörter zugeordnet werden, mit denen die Einzelzeichen in der Druckeinheit adressierbar sind und wobei die jeweils einem Zeichen zugeordneten Datenwörter einem ersten Speicher zugeführt werden, der, falls ein entsprechendes Codewort in ihm gespeichert ist, dieses an die Druckeinheit abgibt und der anderenfalls ein Adressenwort an einen zweiten Speicher abgibt, in dem ebenfalls Codewörter gespeichert sind, dadurch gekennzeichnet, daß beim Abdruck von mehreren Einzelzeichen an einem einzigen Zeichenplatz in Abhängigkeit von jedem Adressenwort (AW) vom zweiten Speicher (S2) mehrere Codewörter (CW) und zugehörige Positionswörter (PW) an die Druckeinheit (DR) abgegeben werden, wobei letztere die Positionen der jeweiligen Einzelzeichen innerhalb des Zeichenplatzes angeben und daß beim Abdruck eines Zeichens, dem mehrere Datenwörter (DW) zugeordnet sind, diese Datenwörter (DW) einem dritten Speicher (S3) zugeführt werden, daß, falls ein entsprechendes Codewort (CW) in diesem dritten Speicher (S3) enthalten ist, dieses an die Druckeinheit (DR) abgegeben wird und daß andernfalls die Datenwörter (DW) zeitlich nacheinander an den ersten bzw. den zweiten Speicher (S1 bzw. S2) abgegeben werden.

2. Verfahren nach Anspruch 1, dadurch gekennzeichnet, daß die Codewörter (CW) einem vierten Speicher (S4) zugeführt werden, der ein den Vorschub in Zeilenrichtung vor und/oder nach dem Abdruck eines Zeichens in Abhängigkeit von dessen Breite festlegendes Steuerwort (SW1) an die Druckeinheit (DR) abgibt.

3. Verfahren nach Anspruch 1 oder Anspruch 2, dadurch gekennzeichnet, daß die Codewörter (CW) einem vierten Speicher zugeführt werden, der ein die Anschlagstärke jedes Einzelzeichens in Abhängigkeit von dessen Fläche festlegendes Steuerwort (SW2) an die Druckeinheit (DR) abgibt.

4. Verfahren nach einem der Ansprüche 1 bis 3, dadurch gekennzeichnet, daß die Positionierwörter (PW) die Richtung und den Betrag der Positionierung eines Druckwerks und/oder des Aufzeichnungsträgers angeben.

5. Verfahren nach Anspruch 4, dadurch gekennzeichnet, daß die Summe der durch die Positionierwörter (PW) ausgelösten Positionierungen 0 ergibt.

6. Verfahren nach einem der Ansprüche 1 bis 5, dadurch gekennzeichnet, daß die Druckeinheit (DR) eine an sich bekannte Typenscheibe enthält, die mit Speichen versehen ist, an deren Enden den Einzelzeichen zugeordnete Typen angeordnet sind und daß die Codewörter (CW) die Nummer der jeweiligen Speiche kennzeichnen.

7. Verfahren nach einem der Ansprüche 1 bis 5, dadurch gekennzeichnet, daß die Druckeinheit (DR) einen Mosaikdruckkopf und einen zugehörigen Zeichengenerator enthält und daß die Codewörter (CW) den Adressen der Einzelzeichen dem Zeichengenerator zugeordnet sind.

**Claims**

1. A method for the representation of characters which are printed on a data carrier by means of a printing unit as individual characters of a predetermined character set or composed of a plurality of individual characters, wherein the characters are coded by data words, wherein the data words are assigned code words, by means of which the individual characters can be addressed in the printing unit and wherein the data words respectively assigned to a character are fed to a first store which, if a corresponding code word is stored therein, transmits said code word to the printing unit and which otherwise transmits an address word to a second store, in which code words are stored, characterised in that when printing a plurality of individual characters at one single character position, in dependence upon each address word (AW), a plurality of code words (CW) and assigned positioning words (PW) are transmitted from the second store (S2) to the printing unit (DR), where said positioning words indicate the positions of the respective individual characters within the character position, and that when printing a character, which is assigned a plurality of data words (DW), these data words (DW) are supplied to a third store (S3), that, if a corresponding code word (CW) is included in the third store (S3), said code word is transmitted to the printing unit (DR), and that otherwise the data words (DW) are transmitted to the first or the second store (S1 or S2), as the case may be, so as to be consecutive in time.

2. A method as claimed in claim 1, characterised in that the code words (CW) are fed to a fourth store (S4) which transmits a control word (SW1) to the printing unit (DR), which control word determines the feed in the line direction before and/or after the printing of a character in dependence upon the width thereof.

3. A method as claimed in claim 1 or claim 2, characterised in that the code words (CW) are fed to a fourth store which transmits a control word (SW2) to the printing unit (DR), which control word determines the impression density of each individual character in dependence upon the surface thereof.

4. A method as claimed in one of claims 1 to 3, characterised in that the positioning words (PW) indicate the direction and the magnitude of the positioning of a printing unit and/or of the data carrier.

5. A method as claimed in claim 4, characterised in that the sum of the positionings triggered by the positioning words (PW) is 0.

6. A method as claimed in one of claims 1 to 5, characterised in that the printing unit (DR) comprises a type disc which is known per se and which is provided with spokes, at whose ends are arranged types which are assigned to the individual characters, and that the code words (CW) represent the number of the respective spoke.

7. A method as claimed in one of claims 1 to 5, characterised in that the printing unit (DR) comprises a mosaic printing head and an assigned character generator, and that the code words (CW) are assigned to the addresses of the individual characters in the character generator.

## Revendications

1. Procédé pour représenter des signes qui sont imprimés sur un support d'enregistrement à l'aide d'une unité d'impression sous la forme de signes individuels d'une réserve prédéterminée de signes ou assemblés à partir de plusieurs signes individuels, dans lequel les signes sont codés par des mots de données, dans lequel on associe aux mots de données des mots de code à l'aide desquels les signes individuels sont adressables dans l'unité d'impression et dans lequel les mots de données sont apliqués à une première mémoire qui, si un mot de code correspondant y est mémorisé, fournit ce mot de code à l'unité d'impression et qui, dans le cas contraire, fournit un mot d'adresse à une seconde mémoire dans laquelle sont mémorisés également des mots de code, caractérisé par le fait que lors de l'impression de plusieurs signes sur l'emplacement d'un signe unique et en fonction de chaque mot d'adresse (AW) plusieurs mots de code (CW) et des mots de position associés (PW) sont fournis par la seconde mémoire (S2) à l'unité d'impression (DR), cette dernière indiquant les positions des signes individuels dans l'emplacement du signe, et que lors de l'impression d'un signe auquel plusieurs mots de données (DW) sont associés, ces mots de données (DW) sont appliqués à une troisième mémoire (S3), que dans le cas où un mot de code (CW) est contenu dans cette troisième mémoire, celui-ci est fourni à l'unité d'impression (DR) et que dans le cas contraire les mots de données (DW) sont fournis successivement dans le temps à la première ou la seconde mémoire (S1, S2).

2. Procédé selon la revendication 1, caractérisé par le fait que les mots de code (CW) sont appliqués à une quatrième mémoire (S4) qui émet pour l'unité d'impression (DR) un mot de commande (SW1) qui détermine l'avance dans la direction des lignes avant et/ou après l'impression d'un signe, en fonction de la largeur de ce dernier.

3. Procédé selon la revendication 1 ou la revendication 2, caractérisé par le fait que les mots de code (CW) sont appliqués à une quatrième mémoire qui fournit à l'unité d'impression (DR) un mot de commande (SW2) qui détermine la force de frappe de chaque signe individuel en fonction de sa surface.

4. Procédé selon l'une des revendications 1 à 3, caractérisé par le fait que les mots de positionnement (PW) indiquent la direction et la valeur du positionnement d'un dispositif d'impression et/ou du support d'enregistrement.

5. Procédé selon la revendication 4, caractérisé par le fait que la somme de positionnement déclenchée par les mots de positionnement (PW) donne 0.

6. Procédé selon l'une des revendications 1 à 5, caractérisé par le fait que l'unité d'impression (DR) comporte un disque de caractères, connu en soi, qui est pourvu de rayons aux extrémités desquels sont disposés les caractères qui sont associés aux signes individuels, et que les mots de code (CW) caractérisent le numéro du rayon correspondant.

7. Procédé selon l'une des revendications 1 à 5, caractérisé par le fait que l'unité d'impression (DR) comporte une tête d'impression mosaïque ainsi qu'un générateur de signes associé, et que les mots de code (CW) sont associés au générateur de signes des adresses des signes individuels.

# FIG 1

# FIG 2

# FIG 3

|  | $2^7$ | | | DW | | | | $2^0$ | $2^7$ | | | CW/AW | | | | $2^0$ |  |
|---|---|---|---|---|---|---|---|---|---|---|---|---|---|---|---|---|---|
| A | 0 | 0 | 1 | 0 | 0 | 0 | 0 | 1 | 0 | 0 | 0 | 0 | 1 | 0 | 1 | 1 | CW |
| 1 | 0 | 0 | 1 | 0 | 0 | 0 | 1 | 0 | 0 | 0 | 1 | 1 | 1 | 1 | 0 | 0 | CW |
| # | 0 | 0 | 1 | 0 | 0 | 0 | 1 | 1 | 1 | 0 | 0 | 0 | 0 | 0 | 0 | 0 | AW |
| e | 0 | 0 | 1 | 0 | 0 | 1 | 0 | 0 | 0 | 1 | 1 | 0 | 0 | 1 | 0 | 1 | CW |

S1

# FIG 4

|  | $2^6$ | | | AW | | | $2^0$ | $2^7$ | | | CW/PW | | | | $2^0$ |  |
|---|---|---|---|---|---|---|---|---|---|---|---|---|---|---|---|---|
| # / | 0 | 0 | 0 | 0 | 0 | 0 | 0 | 0 | 1 | 0 | 0 | 1 | 0 | 1 | 1 | CW |
|  |  |  |  |  |  |  |  | 0 | 0 | 1 | 0 | 0 | 0 | 0 | 1 | PW |
| / | 0 | 0 | 0 | 0 | 0 | 0 | 1 | 0 | 1 | 0 | 0 | 1 | 0 | 1 | 1 | CW |
|  |  |  |  |  |  |  |  | 0 | 0 | 0 | 0 | 0 | 0 | 1 | 0 | PW |
| = | 0 | 0 | 0 | 0 | 0 | 1 | 0 | 0 | 1 | 0 | 0 | 0 | 0 | 1 | 0 | CW |
|  |  |  |  |  |  |  |  | 1 | 0 | 1 | 0 | 0 | 0 | 0 | 1 | PW |
|  |  |  |  |  |  |  |  | E | A | R |  | V | | | |  |

S2